# EUROPÄISCHE PATENTANMELDUNG

(11) **EP 4 477 582 A1**
(43) Veröffentlichungstag der Anmeldung: **18.12.2024**
(21) Anmeldenummer: 24181276.7
(22) Anmeldetag: 11.06.2024
(51) Int. Cl.: B65G 15/00, B65G 15/50, F16G 1/00, F16H 7/24

(54) **RIEMENRÜSTWERKZEUG ZUM AUFBRINGEN VON MINDESTENS ZWEI RIEMEN AUF EINE FÖRDERVORRICHTUNG**

(30) Priorität: 15.06.2023 DE 102023205628
(71) Anmelder: Gea Food Solutions Germany GmbH, 35216 Biedenkopf-Wallau (DE)
(72) Erfinder: KUTTER, Tobias, 87700 Memmingen (DE)
(74) Vertreter: Loock, Jan Pieter

(57) **Zusammenfassung**

Die Erfindung betrifft ein Riemenrüstwerkzeug (1) zum Aufbringen von mindestens zwei Riemen (6) auf eine Fördervorrichtung (100), wobei das Riemenrüstwerkzeug (1) mindestens ein erstes und ein zweites Trägerelement (2, 3) aufweist, die sich im Wesentlichen parallel zueinander erstrecken, wobei das erste Trägerelement (2) eine erste Aussparung (20) zum Aufsetzen des ersten Trägerelements (2) auf eine Welle (10) aufweist, wobei das zweite Trägerelement (3) eine zweite Aussparung (30) zum Aufsetzen des zweiten Trägerelements (3) auf die Welle (10) aufweist, wobei das erste und das zweite Trägerelement (2, 3) über einen Riementräger (4) verbunden sind, wobei der Riementräger (4) mindestens zwei Nuten (40) zum Aufnehmen von mindestens zwei Riemen (6) aufweist.

## Beschreibung

### Stand der Technik

Die Erfindung betrifft ein Riemenrüstwerkzeug zum Aufbringen von mindestens zwei Riemen auf eine Fördervorrichtung. Ferner betrifft die Erfindung ein Verfahren zum gleichzeitigen Aufbringen von mindestens zwei Riemen auf eine Fördervorrichtung mit einem Riemenrüstwerkzeug und ein System.

Fördervorrichtungen mit einer Mehrzahl von Riemen können vielseitig verwendet werden. Insbesondere werden solche Fördervorrichtungen im Bereich der Lebensmittelverarbeitung genutzt. Die Riemen in den Fördervorrichtungen werden derart angetrieben, dass die Produkte auf den Riemen in einer Transportrichtung gefördert werden. Dabei ermöglicht die Mehrzahl an Riemen das gleichzeitige Transportieren von unterschiedlichen Produkten oder das Anbringen von Werkzeugen in den Zwischenräumen der Riemen. Derartige Fördervorrichtungen sind darüber hinaus in beliebigen weiteren Anwendungsgebieten nutzbar.

Nach der Instandhaltung und/oder Reinigung einer solchen Fördervorrichtung, bzw. vor der ersten Inbetriebnahme einer solchen Fördervorrichtung, müssen die mehreren Riemen der Fördervorrichtung auf die Vorrichtung aufgezogen werden. Vor der ersten Inbetriebnahme der Fördervorrichtung beim Benutzer kann die Vorrichtung beim Hersteller getestet werden, wobei hierfür die Riemen erneut auf- und wieder abgezogen werden müssen. Zur Auslieferung, ähnlich wie bei der Instandhaltung oder der Reining, werden die Riemen von der Vorrichtung entfernt, um die Riemen vor Transportschäden zu schützen. Zwangsläufig müssen die Riemen zur Nutzung der Fördervorrichtung wieder auf die Fördervorrichtung aufgezogen werden, wobei der Arbeitsaufwand für einen Benutzer einer solchen Fördervorrichtung mit einer ansteigenden Anzahl an Riemen erheblich ansteigt.

Vor diesem Hintergrund stellt sich die Aufgabe, den Arbeitsaufwand für das Aufziehen mehrerer Riemen auf eine Fördervorrichtung zu reduzieren.

### Offenbarung der Erfindung

Die Aufgabe wird gelöst durch ein Riemenrüstwerkzeug zum Aufbringen von mindestens zwei Riemen auf eine Fördervorrichtung, wobei das Riemenrüstwerkzeug mindestens ein erstes und ein zweites Trägerelement aufweist, die sich im Wesentlichen parallel zueinander erstrecken, wobei das erste Trägerelement eine erste Aussparung zum Aufsetzen des ersten Trägerelements auf eine Welle aufweist, wobei das zweite Trägerelement eine zweite Aussparung zum Aufsetzen des zweiten Trägerelements auf die Welle aufweist, wobei das erste und das zweite Trägerelement über einen Riementräger verbunden sind, wobei der Riementräger mindestens zwei Nuten zum Aufnehmen von mindestens zwei Riemen aufweist.

Das erfindungsgemäße Bauteil hat den Vorteil, dass mehrere Riemen gleichzeitig auf eine Welle und/oder eine Achse einer Fördervorrichtung aufgezogen werden können. Jeweils ein Riemen wird in eine Nut des Trägerelements eingelegt, wobei die Nut insbesondere einen Querschnitt passend zu dem jeweiligen Riemen aufweist.

Der Benutzer der Fördervorrichtung kann die mehreren in einem noch ungespannten Zustand vorliegenden Riemen in einer gewünschten Reihenfolge in die jeweiligen Nuten des Riemenrüstwerkzeuges einlegen. Anstatt einen jeden einzelnen Riemen zu spannen und auf die Fördervorrichtung zu ziehen, bedarf es bei Verwendung des Riemenrüstwerkzeuges lediglich ein einmaliges Spannen und Aufziehen für eine Mehrzahl von Riemen.

Um das Riemenrüstwerkzeug auf eine Achse oder Welle anzuordnen, weist das Riemenrüstwerkzeug ein erstes und ein zweites Trägerelement auf. Das erste und zweite Trägerelement sind dabei bevorzugt parallel angeordnet. Die Haupterstreckungsrichtung der beiden Trägerelemente ist dabei im Wesentlichen parallel, damit beide Trägerelemente auf der Achse oder der Welle angeordnet werden können. Erfindungsgemäß sind das erste und das zweite Trägerelement über den Riementräger verbunden, wobei der Riementräger die Nuten zum Aufnehmen der Riemen aufweist. Beide Trägerelemente erstrecken sich bevorzugt in die gleiche Richtung, ausgehend vom Riementräger. Dies ermöglicht das beidseitige Aufsetzen der beiden Trägerelemente auf der Achse oder der Welle.

Erfindungsgemäß weisen das erste und das zweite Trägerelement eine erste und eine zweite Aussparung auf. Die erste und zweite Aussparung weisen bevorzugt eine Querschnittsfläche passend zum Querschnitt der Achse oder Welle auf, auf welche das Riemenrüstwerkzeug aufgesetzt wird. Die Aussparungen vereinfachen einerseits das Aufschieben des Riemenrüstwerkzeuges auf die Welle, wobei hier bereits die Riemen in einem gespannten Zustand vorliegen, und andererseits ermöglichen diese ein Anordnen des Riemenrüstwerkzeugs auf der Achse oder Welle.

Gemäß einer alternativen Ausgestaltung der Erfindung ist vorgesehen, dass der Riementräger eine Haupterstreckungsebene aufweist, wobei das erste und zweite Trägerelement senkrecht zur Haupterstreckungsebene angeordnet sind. Die Haupterstreckungsebene ist derart definiert, dass ein dreidimensionaler Körper sich in einer Dimension relativ zu den anderen beiden Dimensionen deutlich weniger erstreckt und somit vernachlässigbar ist. Folglich besteht eine Ebene in der sich das Bauteil hauptsächlich erstreckt. Das erste und zweite Trägerelement sind bevorzugt senkrecht zur Haupterstreckungsebene des Riementrägers angeordnet, um das Riemenrüstwerkzeug derart auf der Achse oder Welle zu positionieren, dass die Riemen in eine gewünschte Position gebracht werden. Weiterhin weisen die beiden Trägerelemente bevorzugt eine gleiche Länge auf, wobei die Länge beschreibt in welchem Maße sich die beiden Trägerelemente in senkrechter Richtung zur Haupterstreckungsebene des Riementrägers erstrecken. Dies ermöglicht ein möglichst paralleles Aufschieben des Riemenrüstwerkzeuges auf die Achse oder die Welle.

Somit sind die Riemen in die gewünschte Position an der Achse oder Welle einsetzbar. Es ist davon auszugehen, dass, sofern der Riementräger parallel zur Achse oder Welle angeordnet ist, die Riemen ziemlich exakt über der gewünschten Position angeordnet werden können. Bevorzugt sind das erste und das zweite Trägerelement maximal auf der Haupterstreckungsebene des Riementrägers zueinander distanziert. Somit kann sich das erste Trägerelement beispielsweise nahe einer Kante des Riementrägers befinden und das zweite Trägerelement an der gegenüberliegenden Kante des Riementrägers angeordnet sein.

Gemäß einer alternativen Ausgestaltung der Erfindung ist vorgesehen, dass die mindestens zwei Nuten an einer Kante des Riementrägers angeordnet sind, wobei die Kante im Wesentlichen senkrecht zu dem ersten und zweiten Trägerelement angeordnet ist. Das Riemenrüstwerkzeug kann mindestens eine Kante am Riementräger aufweisen, welche im Wesentlichen parallel zur Haupterstreckungsebene des Riementrägers verläuft. Diese Kante weist bevorzugt mindestens zwei Nuten auf, wobei sich die Nuten im Wesentlichen parallel zu den Trägerelementen durch den Riementräger erstrecken. Somit sind die Riemen und das Riemenrüstwerkzeug anhand der Trägerelemente ausrichtbar. Sofern das erste und das zweite Trägerelement an der Welle angeordnet sind, wären die mehreren Nuten anhand der Trägerelemente ausgerichtet.

Gemäß einer weiteren alternativen Ausgestaltung der Erfindung ist vorgesehen, dass die mindestens zwei Nuten an einer zur Haupterstreckungsebene parallel verlaufenden Kante des Riementrägers angeordnet sind, wobei die Nuten auf der Kante zwischen dem ersten und dem zweiten Trägerelement angeordnet sind. Die beiden Trägerelemente weisen bevorzugt mindestens ein Teil eine Kante des Riementrägers zwischen sich auf, welche sich im Wesentlichen parallel zur Haupterstreckungsebene des Riementrägers erstreckt, wobei die Nuten an einer der Kanten angeordnet sind. Vorteilhafterweise kann somit ein unerwünschtes Verkippen des Riemenrüstwerkzeuges durch die Riemen vermieden werden. So wäre es insbesondere nachteilig, wenn die mehreren Nuten und/oder die Riemen zu einer Seite des beispielsweisen zweiten Trägerelements angeordnet sind und das erste Trägerelement auf der anderen Seite des zweiten Trägerelements angeordnet ist. Sofern die Riemen eine Kraft auf das Riemenrüstwerkzeug ausüben, würde dies zu einem ungewünschten Kippmoment um das zweite Trägerelement führen. Dies gilt in analogerweise für das erste Trägerelement. Das Anordnen der Nuten auf dem Riementräger, somit auch der Riemen, zwischen dem ersten und dem zweiten Trägerelement verhindert vorteilhafterweise diese ungewünschte Rotation um ein Trägerelement.

Gemäß einer alternativen Ausgestaltung der Erfindung ist vorgesehen, dass die erste und die zweite Aussparung eine halbkreisförmige Querschnittsfläche aufweisen. Das Riemenrüstwerkzeug kann anhand des ersten Trägerelements und des zweiten Trägerelements, sowie der ersten und der zweiten Aussparung auf der Achse oder Welle positioniert werden. Die Achse oder Welle weist üblicherweise einen kreisförmigen Querschnitt auf, wobei die erste und die zweite Aussparung bevorzugt eine zu dem Querschnitt der Achse oder Welle passende Querschnittsfläche aufweisen. Eine halbkreisförmige Querschnittsfläche der ersten und der zweiten Aussparung erlaubt einen vorteilhaften Kompromiss aus dem einfachem Positionieren des Riemenrüstwerkzeugs auf der Welle und einer guten Stabilität.

Alternativ kann die Querschnittsfläche der ersten Aussparung und der zweiten Aussparung sich unterscheiden.

Die Querschnittsfläche der ersten und/oder der zweiten Aussparung kann alternativ ein Kreissegment abbilden. Somit dienen die Aussparungen eher der einfachen Positionierung des Riemenrüstwerkzeugs als der Stabilität. Der Radius einer kreisförmigen Querschnittsfläche der ersten und zweiten Aussparung kann bevorzugt dem Radius der Achse oder der Welle entsprechen, auf welcher die Vorrichtung angeordnet werden soll.

Gemäß einer alternativen Ausgestaltung der Erfindung ist vorgesehen, dass innerhalb der mindestens zwei Nuten jeweils eine weitere Nut angeordnet ist. Die weitere Nut kann insbesondere mittig in der Nut angeordnet sein.

Gemäß einer alternativen Ausgestaltung der Erfindung ist vorgesehen, dass das Riemenrüstwerkzeug weitere Trägerelemente mit weiteren Aussparungen aufweist, wobei diese insbesondere äquidistant auf der Haupterstreckungsebene zueinander angeordnet sind. Die weiteren Trägerelemente weisen bevorzugt die gleichen Merkmale wie das erste und das zweite Trägerelement auf. Insbesondere bei längeren Wellen, welche eine hohe Anzahl von Riemen aufweisen können, kann es vorteilhaft sein, wenn das Riemenrüstwerkzeug an mehreren Stellen durch die Trägerelemente an der Welle gestützt wird. Die mehreren Riemen erzeugen bei vorliegender Spannung eine Kraft auf das Riemenrüstwerkzeug. Sofern eine Vielzahl an Riemen auf eine große Länge des Riemenrüstwerkzeugs verteilt sind, ohne dass das Riemenrüstwerkzeug an weiteren Stellen gestützt wird, kann sich das Bauteil verformen. Es ist dabei von Vorteil das Bauteil durch weitere Trägerelemente an der Welle abzustützen. Ferner ist es vorteilhaft die Trägerelemente äquidistant zueinander anzuordnen, sodass die Kraft der Riemen in optimalerweise auf das Riemenrüstwerkzeug verteilt wird.

Gemäß einer alternativen Ausgestaltung der Erfindung ist vorgesehen, dass die mindestens zwei Nuten äquidistant zueinander angeordnet sind. Sofern die Nuten äquidistant zueinander angeordnet sind, sind auch die einzusetzenden Riemen äquidistant zueinander. Dies ermöglicht eine optimale Kräfteverteilung.

Gemäß einer alternativen Ausgestaltung der Erfindung ist vorgesehen, dass der Riementräger ein Spannelement aufweist. Das Spannelement kann derart konfiguriert sein, dass es die Riemen zumindest teilweise von der Achse oder Welle entfernt hält. Dafür ist es insbesondere bevorzugt, wenn das Spannelement an der den Nuten gegenüberliegenden Kante angeordnet ist. Bei den Nuten kann es wünschenswert sein, dass die Riemen teilweise in Kontakt mit der Achse oder der Welle stehen. Im Gegensatz dazu kann das Spannelement ein vereinfachtes Aufschieben des Riemenrüstwerkzeugs auf die Achse oder Welle ermöglichen. Sofern die Achse oder Welle mehrere Rillen zur Aufnahme der Riemen aufweist, wirkt sich das Spannelement positiv auf. Das Riemenrüstwerkzeug kann seitlich auf die Achse oder Welle aufgeschoben werden, wobei das Spannelement verhindert, dass die Riemen sich in den Rillen verhaken. Damit die technische Wirkung für die mehreren Riemen des Riemenrüstwerkzeugs erreicht werden kann, ist es besonders vorteilhaft, wenn das Spannelement auf der gesamten Breite des Riementrägers angeordnet ist. In einer alternativen Ausgestaltung erstreckt sich das Spannelement lediglich von einer ersten Nut des Riementrägers zu der, ausgehend von der ersten Nut, letzten Nut des Riementrägers. Das Spannelement kann auch als Schutz der Riemen dienen. Das Spannelement kann anstatt einer scharfen Kante vorliegen, wobei diese den Riemen potenziell schaden kann.

Gemäß einer alternativen Ausgestaltung der Erfindung ist vorgesehen, dass das Spannelement in einem Winkel zum Riementräger angeordnet ist, insbesondere in einem Winkelbereich von 90 bis 135 Grad, wobei das Spannelement sich in eine gleiche Richtung wie das erste Trägerelement und das zweite Trägerelement erstreckt. Die technische Wirkung des Spannelements wirkt besonders vorteilhaft, sofern das Spannelement sich in die gleiche Richtung wie das erste und zweite Trägerelement und somit sich auch in Richtung zur Achse oder Welle hin erstreckt. Da das Riemenrüstwerkzeug anhand der Trägerelemente an der Achse oder Welle ausgerichtet sein kann, führt eine gleiche Orientierung des Spannelements dazu, dass das Spannelement auch in Richtung der Achse oder Welle ausgerichtet ist. Der Winkelbereich zwischen 90 und 135 Grad beschreibt einen Kompromiss aus zumutbarer Spannung auf dem Riemenrüstwerkzeug und auf den Riemen, sowie Vermeidung der Beeinflussung der Riemen durch die Achse oder die Welle beim Aufbringen des Riemenrüstwerkzeuges.

In einer alternativen Ausgestaltung erstreckt sich das Spannelement in die den Trägerelementen entgegengesetzte Richtung. In dieser Ausgestaltung ist es besonders vorteilhaft, wenn das Spannelement in Relation zu dem Riemenrüstwerkzeug kurz ausgestaltet ist, sodass das Spannelement lediglich eine geringfügige Umlenkung der Riemen darstellt. Eine lediglich geringfügige Umlenkung des Riemens kann bereits ausreichen, dass die Riemen beim Aufschieben des Riemenrüstwerkzeuges nicht mehr der Achse oder Welle interagieren.

Ferner wird die Aufgabe durch ein Verfahren zum gleichzeitigen Aufbringen von mindestens zwei Riemen auf eine Fördervorrichtung mit einem Riemenrüstwerkzeug nach einem der vorhergehenden Ausführungsformen, wobei die Fördervorrichtung mindestens eine Welle und/oder mindestens eine Achse aufweist, wobei das Verfahren mindestens die folgenden Schritte aufweist:
a) Einlegen der mindestens zwei Riemen in jeweils eine Nut des Riemenrüstwerkzeuges;
b) Anlegen der Riemen auf einer Achse der Fördervorrichtung;
c) Aufschieben des Riemenrüstwerkzeuges mit den Riemen auf die Welle, wobei der Riementräger im Wesentlichen parallel zur Welle verschoben wird, wobei die erste und die zweite Aussparung nach dem Aufschieben des Riemenrüstwerkzeuges an der Welle der Fördervorrichtung anliegen;
d) Rotation des Riemenrüstwerkzeuges, wobei die Nuten hin zu zur Fördervorrichtung gedreht werden; und
e) Entnehmen des Riemenrüstwerkzeuges, wobei der Riementräger im Wesentlichen parallel zur Welle herausgezogen wird.

In einem ersten Verfahrensschritt kann jeweils ein Riemen in jeweils eine Nut des Riemenrüstwerkzeuges eingelegt werden. Die jeweiligen Nuten legen bevorzugt die Positionierung der mehreren Riemen auf der Achse oder der Welle fest. Die mehreren Riemen, welche auf die Achse oder Welle aufgezogen werden, werden in einem zweiten Verfahrensschritt auf eine weitere Achse oder Welle der Fördervorrichtung gezogen. Die Riemen befinden sich zu diesem Zeitpunkt noch in einem ungespannten Zustand und können einfach auf die weitere Achse oder Welle der Fördervorrichtung aufgelegt werden. In einem dritten Verfahrensschritt kann das Riemenrüstwerkzeug auf die Welle aufgeschoben werden. Aufgrund der vorliegenden Spannung der Riemen ist es besonders vorteilhaft, dass Riemenrüstwerkzeug im Wesentlichen parallel zur Achse oder zur Welle aufzuschieben. Insbesondere wenn der vorliegende Abstand zwischen Achse oder Welle und dem Riemenrüstwerkzeug möglichst klein ausfällt. Sofern das Riemenrüstwerkzeug an einer gewünschten Position positioniert ist, werden die erste und zweite Aussparung bzw. das erste und das zweite Trägerelement an die Achse oder die Welle angelegt. In einem vierten Verfahrensschritt sind die Riemen bereits oberhalb einer gewünschten Stelle an der jeweiligen Achse oder Welle angeordnet. Nun gilt es die Riemen aus den Nuten zu entfernen, wobei dies durch eine Rotation des Riemenrüstwerkzeuges um die Rotationsachse der Achse oder Welle bewerkstelligt werden kann. Hierzu werden bevorzugt die Nuten des Riemenrüstwerkzeugs um die Rotationsachse der Achse oder Welle hin zur Fördervorrichtung rotiert. Die Nuten sind bevorzugt senkrecht zur Haupterstreckungsebene des Riementräger zu einer Seite hin geöffnet, wobei es gilt diese geöffnete Seite hin zur Fördervorrichtung zu rotieren. Somit lösen sich die Riemen aus den Nuten, wenn das Bauteil rotiert wird. Im Verfahrensschritt e) kann das Riemenrüstwerkzeug im Wesentlichen parallel zur Achse oder Welle entfernt werden. Beim Entfernen des Riemenrüstwerkzeuges rutschen die Riemen über die Rückseite des Riementrägers, wobei die Rückseite des Riementrägers die Fläche darstellt welche gegenüber der Fläche mit den mehreren Trägerelemente liegt, bevorzugt auf die gewünschte Position des Riemens an der Achse oder Welle. Das im Wesentlichen parallele Entnehmen des Riemenrüstwerkzeuges verhindert das Verrutschen der Riemen aus der gewünschten Position und vereinfacht das Entnehmen. Das Entnehmen kann hierbei entweder in die gleiche Richtung wie das Aufschieben des Riemenrüstwerkzeuges oder in die entgegengesetzte Richtung stattfinden.

In einer alternativen Ausgestaltung weist der Riementräger eine Fläche auf, welche der Fläche, an der das erste und das zweite Trägerelement angeordnet sind, gegenüberliegt, wobei diese Fläche eine reibungsmindernde Beschichtung aufweist oder derart bearbeitet ist, dass die Riemen mit möglichst wenig Reibungswiderstand über die Fläche gleiten. Beispielsweise kann die Fläche poliert sein oder eine beliebige Beschichtung aufweisen.

Gemäß einer weiteren alternativen Ausgestaltung der Erfindung ist vorgesehen, dass ein weiteres Riemenrüstwerkzeuge nach einem der vorhergehenden Ausführungsformen vorliegt, wobei die Verfahrensschritte a), c), d) und e) analog mit dem weiteren Riemenrüstwerkzeug anstatt des Verfahrensschritts b) angewendet werden. Somit liegen zwei erfindungsgemäße Riemenrüstwerkzeuge vor, wobei anstatt die mehreren Riemen auf einer Achse oder Welle der Fördervorrichtung per Hand einzulegen, ein weiteres Riemenrüstwerkzeug benutzt werden kann. Dies wirkt sich insbesondere positiv auf die notwendige Arbeitszeit zum Aufziehen der mehreren Riemen aus. Für das weitere Riemenrüstwerkzeug wird bevorzugt ein zweiter Benutzer benötigt. Der Verfahrensschritt c) kann bei zwei vorliegenden Riemenrüstwerkzeugen bei beiden Riemenrüstwerkzeugen insbesondere gleichzeitig ausgeführt werden. Verfahrensschritt b) ist nicht mehr notwendig.

Gemäß einer alternativen Ausgestaltung der Erfindung ist vorgesehen, dass die Riemen per Hand auf das Riemenrüstwerkzeug und/oder auf die Achse aufgezogen werden.

Ein weiterer Gegenstand der Erfindung ist ein System aufweisend eine Fördervorrichtung, einem Riemenrüstwerkzeug nach einem der vorhergehenden Ausführungsformen und mindestens zwei Riemen.

In einer weiteren bevorzugten Ausgestaltung erstreckt sich die Haupterstreckungsebene des Riementrägers im Wesentlichen parallel zu einer Haupterstreckungsrichtung der Welle und/oder Achse.

Gemäß einer alternativen Ausgestaltung der Erfindung ist vorgesehen, dass die Welle und/oder die Achse eine oder mehrere Rillen zur Aufnahme der Riemen aufweisen, wobei die Abstände zwischen den Rillen an die Abstände zwischen den Nuten des Riemenrüstwerkzeuges angepasst sind. Die Rillen weisen bevorzugt eine Querschnittsfläche passend zu den Riementräger auf, wobei die Rillen insbesondere einen trapezförmigen - oder rechteckigen Querschnitt aufweisen. Alternativ kann die Querschnittsfläche auch halbkreisförmig sein. Die Abstände zwischen den Nuten sind bevorzugt derart ausgewählt, dass die mehreren Rillen in die für die Riemen vorgesehenen Rillen der Achse oder der Welle platziert werden.

Bei dem Verfahren und dem System können dieselben technischen Wirkungen und Vorteile erreicht werden, wie sie bereits im Zusammenhang mit dem erfindungsgemäßen Riemenrüstwerkzeug zum Aufbringen von mindestens zwei Riemen auf eine Fördervorrichtung beschrieben wurden.

Alternativ oder zusätzlich zu den vorstehend erläuterten vorteilhaften Ausgestaltungen des Verfahrens oder des Systems können bei dem Verfahren und dem System auch die im Zusammenhang mit dem Riemenrüstwerkzeug zum Aufbringen von mindestens zwei Riemen auf eine Fördervorrichtung erläuterten vorteilhaften Ausgestaltungen und Merkmale, allein oder in Kombination, Anwendung finden.

Weitere Einzelheiten und Vorteile der Erfindung sollen nachfolgend anhand des in den Zeichnungen dargestellten Ausführungsbeispiels erläutert werden. Hierin zeigt:
- Fig. 1: eine isometrische Darstellung eines Ausführungsbeispiel eines Riemenrüstwerkzeuges;
- Fig. 2: ein Ausführungsbeispiel des Riemenrüstwerkzeuges in Kombination mit einer Fördervorrichtung einer Welle;
- Fig. 3: das Ausführungsbeispiel aus Fig. 2 in Kombination mit einer Mehrzahl an Riemen; und
- Fig. 4: das Ausführungsbeispiel aus Fig. 2 mit einer geringeren Anzahl an Riemen als in Fig. 3.

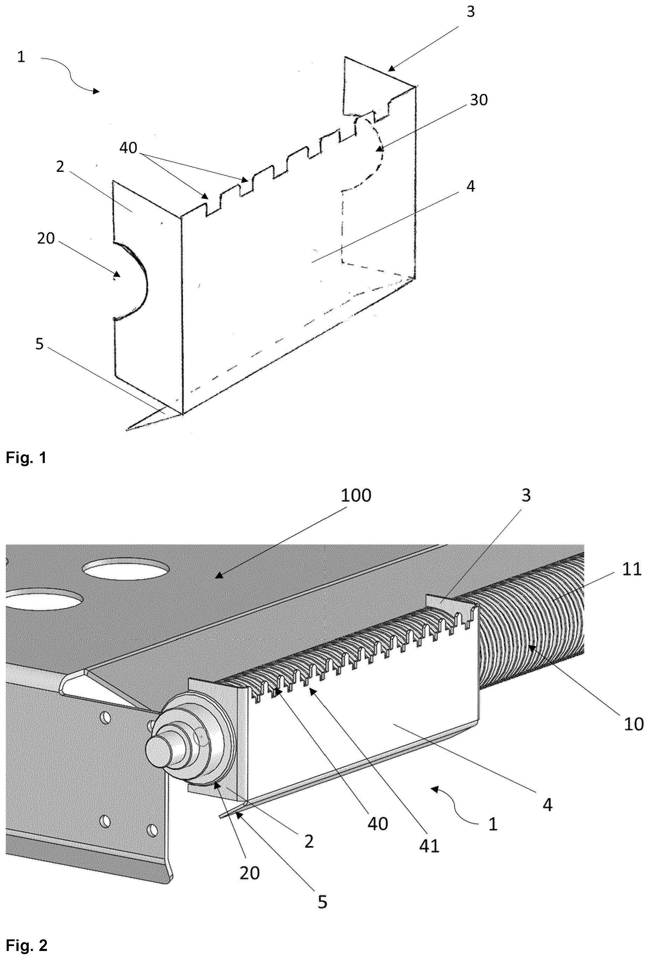

Die **Fig. 1** zeigt ein Ausführungsbeispiel des erfindungsgemäßen Riemenrüstwerkzeuges 1. Das erfindungsgemäße Riemenrüstwerkzeug 1 wird zum gleichzeitigen Aufbringen von mehreren Riemen auf eine Achse oder Welle einer Fördervorrichtung genutzt. Eine derartige Fördervorrichtung findet insbesondere in der Lebensmittelindustrie Anwendung und ist insbesondere bevorzugt als Schneidemaschine für Lebensmittelprodukte ausgeführt.

Das Riemenrüstwerkzeug 1 weist erfindungsgemäß mindestens ein erstes und ein zweites Trägerelement 2, 3 auf, welche sich im Wesentlichen parallel zueinander erstrecken. In Fig. 1 sind die beiden Trägerelemente 2, 3 parallel zueinander angeordnet. Es ist denkbar, dass das Riemenrüstwerkzeug 1 ein Bauteil ist, welches über gezielte Herstellungsverfahren aus einem metallischen Blechteil geformt wird. Das erste und das zweite Trägerelement 2, 3 können beispielsweise gekantet werden, wobei es durch Fertigungstoleranzen und ungenaue Herstellungsverfahren durchaus denkbar ist, dass die beiden Trägerelemente 2, 3 nicht exakt parallel angeordnet sind.

Das erste und das zweite Trägerelement 2, 3 weisen jeweils eine Aussparung 20, 30 auf. Das erste Trägerelement 2 weist die erste Aussparung 20 zum Aufsetzen des ersten Trägerelements auf eine Achse oder Welle auf. Analog weist das zweite Trägerelement 3 eine zweite Aussparung 30 zum Aufsetzen des zweiten Trägerelements 30 auf die Achse oder Welle auf. Die Aussparungen 20, 30 sind jeweils gestrichelt in Fig. 1 angedeutet und weisen bevorzugt eine halbkreisförmige Querschnittsfläche auf. Es wäre jedoch denkbar, dass die Querschnittsfläche der jeweiligen Aussparungen 20, 30 ein Kreissegment abbilden. Das Riemenrüstwerkzeug 1 kann wie in Fig. 2, 3, 4 auf eine Achse oder Welle gesetzt werden, wobei der kreisförmige Querschnitt der Achse oder Welle 10 einen Radius aufweisen. Der Radius der Querschnittsfläche der ersten und zweiten Aussparung 20, 30 ist größer oder gleich dem Radius der Achse oder der Welle 10 auf die das Riemenrüstwerkzeug 1 aufgebracht werden soll. Der halbkreisförmige Querschnitt der ersten und der zweiten Aussparung 20, 30 ermöglicht ein einfaches Positionieren des Riemenrüstwerkzeuges 1 auf einem beliebigen rotationssymmetrischen Bauteil.

Das erste Trägerelement 2 und das zweite Trägerelement 3 sind erfindungsgemäß über einen Riementräger 4 verbunden. Dieser Riementräger 4 weist mindestens 2 Nuten 40 auf, wobei diese Nuten 40 jeweils einen Riemen aufnehmen können. Aus Fig. 1 wird deutlich, dass der Riementräger 4 eine Haupterstreckungsebene aufweist. Bevorzugt besteht das Riemenrüstwerkzeug 1 aus einem dünnwandigen Metall, wobei die Dicke des Materials gegenüber den anderen beiden Dimensionen vernachlässigbar gering ist. Die Haupterstreckungsebene des Riementrägers 4 erstreckt sich in die Länge und in die Höhe, wobei das erste Trägerelement 2 und das zweite Trägerelement 3 senkrecht zu dieser Haupterstreckungsebene angeordnet sind. Bevorzugt sind die beiden Trägerelemente 2, 3 entlang der Haupterstreckungsebene maximal zueinander distanziert. Im vorliegenden Ausführungsbeispiel sind das erste und das zweite Trägerelement 2, 3 an den jeweiligen zur Haupterstreckungsebene senkrecht stehenden, gegenüberliegenden Kanten angeordnet. So ist das erste Trägerelement 2 auf der linken Seite des Riementrägers 4 und das zweite Trägerelement 3 auf der rechten Seite des Riementrägers 4 angeordnet. Darüber hinaus ist es denkbar, dass ein Riemenrüstwerkzeug 1 mehrere erste und zweite Trägerelement 2, 3 aufweist, wobei dies sich bei insbesondere langen Riemenrüstwerkzeugen 1 mit einer Vielzahl von Nuten 40 und aufzunehmenden Riemen vorteilhaft auswirkt. Die Trägerelemente 2, 3 können das Riemenrüstwerkzeug 1 auf einer Achse oder Welle abstützen und somit verhindern, dass sich das Riemenrüstwerkzeug 1 unter der vorliegenden Last deformiert. Die weiteren Trägerelemente weisen bevorzugt auch jeweils eine weitere Aussparung auf, genau wie das erste und das zweite Trägerelement 2, 3. Die weiteren Trägerelemente sind bevorzugt äquidistant zueinander angeordnet, sodass die Kräfte die auf das Riemenrüstwerkzeug 1 wirken gleichmäßig verteilt werden können.

Die mindestens zwei Nuten 40 sind dabei bevorzugt zwischen dem ersten und dem zweiten Trägerelement 2, 3 angeordnet. Die Nuten 40 sind bevorzugt an einer zur Haupterstreckungsebene des Riementrägers 4 parallelen Kante des Riementrägers 4 angeordnet. Insbesondere bevorzugt sind die Nuten 40 an einer Kante des Riementrägers 4 angeordnet, welche im Wesentlichen senkrecht zu dem ersten und dem zweiten Trägerelement 2, 3 angeordnet ist. Das Ausführungsbeispiel aus Fig. 1 weist sechs Nuten 40 auf, wobei diese äquidistant zueinander angeordnet sind. Die Nuten 40 sind auf der Kante zwischen dem ersten und dem zweiten Trägerelement 2, 3, erstrecken sich im Wesentlichen parallel zu den Trägerelementen 2, 3 durch den Riementräger 4 und sind in gleichen Abständen zueinander angeordnet. Es ist denkbar, dass ein Riemenrüstwerkzeug 1 eine Vielzahl von Nuten 40 aufweist, wobei die Zeitersparnis durch die Verwendung des Riemenrüstwerkzeugs 1 mit einer steigenden Anzahl an aufzuziehenden Riemen erheblich steigt.

Weiterhin kann das Riemenrüstwerkzeug 1 ein Spannelement 5 aufweisen, wobei das Spannelement 5 am Riementräger 4 angeordnet ist. Das Spannelement 5 ist an der den Nuten 40 gegenüberliegenden Kante angeordnet. Im vorliegenden Ausführungsbeispiel erstreckt sich das Spannelement 5 über die gesamte Länge der Kante. Es ist jedoch denkbar, dass das Spannelement 5 an der den Nuten 40 gegenüberliegenden Kante lediglich auf der Länge des Riementrägers 4 angeordnet ist, welche sich von einer ersten Nut 40 bis zu einer letzten Nut 40, welche von der ersten Nut 40 am weitesten entfernt ist, erstreckt.

**Fig. 2** zeigt ein Ausführungsbeispiel des erfindungsgemäßen Riemenrüstwerkzeugs 1 in Kombination mit einer Fördervorrichtung 100 und einer Achse oder Welle 10. Eine Fördervorrichtung 100 kann mehrere Achsen und/oder Wellen 10 aufweisen. Die Welle 10 kann mehrere Rillen 11 aufweisen, wobei die Rillen 11 derart konfiguriert sind, dass diese Riemen aufnehmen. Es ist dabei denkbar, dass die Abstände zwischen den Nuten 40 des Riemenrüstwerkzeuges 1 an die Abstände der Rillen 11 der Welle 10 angepasst sind. Dabei wäre es vorteilhaft, wenn die mehreren Riemen die durch das Riemenrüstwerkzeug 1 aufzubringen sind an den gewünschten Positionen bzw. Rillen 11 positioniert werden können. Die Rillen 11 vermeiden eine laterale Bewegung der in den Rillen 11 positionierbaren Riemen. Außerdem kann die erste und/oder das zweite Trägerelement 2, 3 in einer Rille 11 positioniert werden, sodass das Riemenrüstwerkzeug 1 seitlich nicht verrutscht. Ferner wird in Fig. 2 gezeigt, dass innerhalb der mindestens zwei Nuten 40 jeweils eine weitere Nut 41 angeordnet ist, wobei diese insbesondere mittig angeordnet sind.

Das Riemenrüstwerkzeug 1 ist in Fig 2 an der Welle 10 angeordnet, wobei die Welle 10 in der ersten und zweiten Aussparung 20, 30 positioniert ist, sodass das erste und das zweite Trägerelement 2, 3 an der Welle 10 anliegen. Somit wird das Riemenrüstwerkzeug 1 durch die Trägerelemente 2, 3 an der Welle 10 gestützt und kann um die Rotationsachse der Welle 10 rotiert werden.

Ferner weist das Ausführungsbeispiel des Riemenrüstwerkzeugs 1 aus Fig. 2 Fasen an den Nuten 40 auf. Diese Fasen sind senkrecht zu den Trägerelementen 2, 3 angeordnet, sodass ein Riemen von der den Fasen zugewandten Seite einfacher in die Nut 40 eingesetzt werden kann.

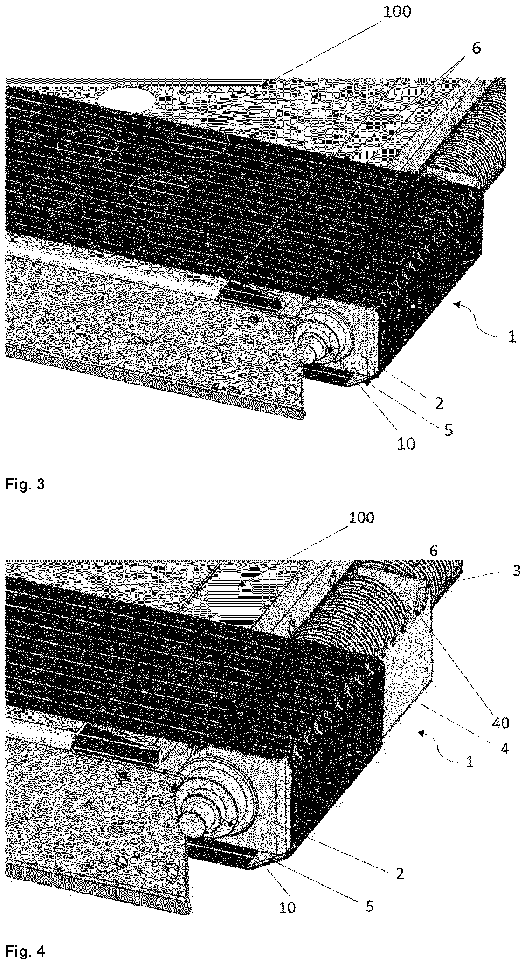

**Fig. 3 und Fig. 4** zeigen ähnlich wie Fig. 2 die Kombination aus einer Fördervorrichtung 100, einer Welle 10 und einem Riemenrüstwerkzeug 1. Im Gegensatz zu Fig. 2 zeigen Fig. 3 und Fig. 4 zusätzlich noch die durch das Riemenrüstwerkzeug 1 aufzubringenden Riemen 6. In Fig. 3 weisen alle Nuten 40 des Riemenrüstwerkzeugs 1 einen Riemen 6 auf, wobei in Fig. 4 lediglich die Hälfte der Nuten 40 einen Riemen 6 aufweisen. Die Nuten 40 des Riemenrüstwerkzeugs 1 müssen somit nicht zwangsläufig einen Riemen 6 aufweisen.

Bevor das Riemenrüstwerkzeug 1 mit den Riemen 6 auf der Welle 10 einer Fördervorrichtung 100 aufgesetzt wird, werden bevorzugt die mindestens zwei Riemen 6 in jeweils eine Nut 40 des Riemenrüstwerkzeuges 1 eingelegt. Dies kann insbesondere per Hand getätigt werden, wobei sich die Riemen 6 hier noch in einem ungespannten Zustand befinden. In einem nächsten Schritt werden bevorzugt die anderen Enden der Riemen 6 auf eine Achse oder andere Welle der Fördervorrichtung 100 aufgelegt. Dieser Schritt kann per Hand oder auch mit einem weiteren Riemenrüstwerkzeug 1 getätigt werden.

Auf den zweiten Schritt folgend wird bevorzugt das Riemenrüstwerkzeug 1 mit den Riemen 6 auf die Welle 10 aufgeschoben, wobei der Riementräger 4 im Wesentlichen parallel zur Welle 10 verschoben wird. Das parallele Aufschieben ermöglicht vorteilhafterweise, dass der Abstand zwischen der Welle 10 und dem Riementräger 4 möglichst gering gehalten wird. Die Riemen 6 befinden sich nun in einem gespannteren Zustand, sodass dieser Schritt Kraft seitens des Benutzers bedarf. Da die Dehnung der Riemen 4 proportional mit der vorliegenden Spannkraft der Riemen 6 zusammenhängt, ist es wünschenswert den Abstand zwischen Riemenrüstwerkzeug 1 und Welle 10 gering zu halten. Nachdem Aufschieben des Riemenrüstwerkzeugs 1 bis zu einer gewünschten Position des Riemenrüstwerkzeugs 1 oberhalb der Welle 10, werden bevorzugt das erste und das zweite Trägerelement 2, 3 an der Welle 10 angelegt. Somit ist das Riemenrüstwerkzeug 1 positioniert. In den Fig. 2, 3, 4 zeigt das Ausführungsbeispiel mit den Nuten 40, welche an einer im Wesentlichen senkrecht zu den Trägerelementen 2, 3 angeordneten oberen Kante des Riementrägers 4 angeordnet sind. Alternativ wäre es denkbar, dass die Nuten 40 an der gegenüberliegenden Kante bzw. der in den Figuren unteren Kante des Riementrägers 4 angeordnet sind.

Anschließend zum Aufbringen der Riemen 6 auf die Welle 10, kann das Riemenrüstwerkzeug 1 um die Welle 10 rotiert werden. Bevorzugt wird die Kante des Riementrägers 4, welche die Nuten 40 aufweist, auf kürzestem Wege hin zur Fördervorrichtung 100 rotiert. In den gezeigten Ausführungsbeispielen befinden sich die Nuten 40 jeweils an der oberen Kante des Riementrägers 4 und die Fördervorrichtung 100 befindet sich links von der Welle 10. Somit wird das Riemenrüstwerkzeug 1 bevorzugt gegen den Uhrzeigersinn um die Rotationsachse der Welle 10 gedreht. Alternativ, sofern die Nuten an der unteren Kante des Riementrägers 4 angeordnet sind, müsste das Riemenrüstwerkzeug 1 mit dem Uhrzeigersinn rotiert werden, um auf kürzestem Wege zur Fördervorrichtung 100 zu gelangen.

Besonders bevorzugt wird das Riemenrüstwerkzeug 1 derart auf die Welle 10 aufgeschoben und angelegt, dass die Haupterstreckungsebene des Riementrägers 4 im Wesentlichen senkrecht zur Fördervorrichtung 100 positioniert ist. Somit besteht die geringste Gefahr, dass die Riemen 6 bereits zuvor aus den Nuten 40 rausrutschen. Die Riemen 6 rutschen bevorzugt erst nach einer Rotation des Riemenrüstwerkzeugs um ca. 90 Grad aus den Nuten 40. Das Riemenrüstwerkzeug 1 wird bevorzugt um einen Winkel rotiert, welcher in einem Winkelbereich von 90 bis 135 Grad liegt.

Nachdem die Riemen 6 nicht mehr in den Nuten 40 positioniert sind, kann das Riemenrüstwerkzeug 1 in einem letzten Verfahrensschritt parallel zur Welle 10 herausgezogen werden. Die Richtung beim Herausziehen kann hierbei entgegen der Einschieberichtung oder weiter mit der Einschieberichtung laufen.

Die oben aufgeführten Verfahrensschritte können auch für ein weiteres Riemenrüstwerkzeug 1 angewendet werden. So müssten die Riemen 6 nicht per Hand auf eine Achse der Fördervorrichtung 100 aufgelegt werden, sondern die beiden Riemenrüstwerkzeuge 1 werden gleichzeitig auf die jeweilige Achse oder Welle aufgebracht.

Weiterhin geht aus den Fig. 3 und Fig. 4 eindeutig der Nutzen des Spannelements 5 hervor. Bevorzugt ist das Spannelement 5 an der den Nuten 40 gegenüberliegenden Kante des Riementrägers 4 angeordnet. Das Spannelement 5 schützt einerseits die Riemen vor einer scharfen Unterkante des Riementrägers 4 und andererseits ermöglicht das Spannelement 5 ein einfaches Aufschieben des Riemenrüstwerkzeuges 1 auf eine Achse oder Welle. Bevorzugt ist das Spannelement 5 in einem Winkelbereich von 90 bis 135 Grad zum Riementräger 4 angeordnet, wobei sich das Spannelement 5 in die gleiche Richtung wie das erste und das zweite Trägerelement 2, 3 erstreckt.

In **Fig. 3 und Fig. 4** werden die Riemen 6 durch das Spannelement 5 von der Welle 10 entfernt, sodass diese mit den Rillen 11 beim Aufschieben des Riemenrüstwerkzeugs 1 nicht interagieren.

### Bezugszeichenliste

- 1: Riemenrüstwerkzeug
- 2: erstes Trägerelement
- 3: zweites Trägerelement
- 4: Riementräger
- 5: Spannelement
- 6: Riemen
- 10: Welle
- 11: Rillen
- 20: erste Aussparung
- 30: zweite Aussparung
- 40: Nuten
- 41: weitere Nuten
- 100: Fördervorrichtung

## Patentansprüche

1. Riemenrüstwerkzeug (1) zum Aufbringen von mindestens zwei Riemen (6) auf eine Fördervorrichtung (100),
wobei das Riemenrüstwerkzeug (1) mindestens ein erstes und ein zweites Trägerelement (2, 3) aufweist, die sich im Wesentlichen parallel zueinander erstrecken, wobei das erste Trägerelement (2) eine erste Aussparung (20) zum Aufsetzen des ersten Trägerelements (2) auf eine Welle (10) aufweist,
wobei das zweite Trägerelement (3) eine zweite Aussparung (30) zum Aufsetzen des zweiten Trägerelements (3) auf die Welle (10) aufweist,
wobei das erste und das zweite Trägerelement (2, 3) über einen Riementräger (4) verbunden sind, wobei der Riementräger (4) mindestens zwei Nuten (40) zum Aufnehmen von mindestens zwei Riemen (6) aufweist.

2. Riemenrüstwerkzeug nach Anspruch 1, **dadurch gekennzeichnet, dass** der Riementräger (4) eine Haupterstreckungsebene aufweist, wobei das erste und zweite Trägerelement (2, 3) senkrecht zur Haupterstreckungsebene angeordnet sind.

3. Riemenrüstwerkzeug nach einem der vorhergehenden Ansprüche, **dadurch gekennzeichnet, dass** die mindestens zwei Nuten (40) an einer Kante des Riementrägers (4) angeordnet sind, wobei die Kante im Wesentlichen senkrecht zu dem ersten und zweiten Trägerelement (2, 3) angeordnet ist.

4. Riemenrüstwerkzeug nach einem der vorhergehenden Ansprüche, **dadurch gekennzeichnet, dass** die erste und die zweite Aussparung (20, 30) eine halbkreisförmige Querschnittsfläche aufweisen.

5. Riemenrüstwerkzeug nach einem der vorhergehenden Ansprüche, **dadurch gekennzeichnet, dass** innerhalb der mindestens zwei Nuten (40) jeweils eine weitere Nut (41) angeordnet ist.

6. Riemenrüstwerkzeug nach einem der vorhergehenden Ansprüche, **dadurch gekennzeichnet, dass** das Riemenrüstwerkzeug (1) weitere Trägerelemente mit weiteren Aussparungen aufweist, wobei diese insbesondere äquidistant zueinander angeordnet sind.

7. Riemenrüstwerkzeug nach einem der vorhergehenden Ansprüche, **dadurch gekennzeichnet, dass** die mindestens zwei Nuten (40) äquidistant zueinander angeordnet sind.

8. Riemenrüstwerkzeug nach einem der vorhergehenden Ansprüche, **dadurch gekennzeichnet, dass** der Riementräger (4) ein Spannelement (5) aufweist.

9. Riemenrüstwerkzeug nach einem der vorhergehenden Ansprüche, **dadurch gekennzeichnet, dass** das Spannelement (5) in einem Winkel zum Riementräger (4) angeordnet ist, insbesondere in einem Winkelbereich von 90 bis 135 Grad, wobei das Spannelement (5) sich in eine gleiche Richtung wie das erste Trägerelement (2) und das zweite Trägerelement (3) erstreckt.

10. Verfahren zum gleichzeitigen Aufbringen von mindestens zwei Riemen (6) auf eine Fördervorrichtung (100) mit einem Riemenrüstwerkzeug (1) nach Anspruch 1, wobei die Fördervorrichtung (100) mindestens eine Welle (10) und/oder mindestens eine Achse aufweist, wobei das Verfahren mindestens die folgenden Schritte aufweist:
a) Einlegen der mindestens zwei Riemen (6) in jeweils eine Nut (40) des Riemenrüstwerkzeuges (1);
b) Anlegen der Riemen (6) auf einer Achse der Fördervorrichtung (100);
c) Aufschieben des Riemenrüstwerkzeuges (1) mit den Riemen (6) auf die Welle (10), wobei der Riementräger (4) im Wesentlichen parallel zur Welle (10) verschoben wird, wobei die erste und die zweite Aussparung (20, 30) nach dem Aufschieben des Riemenrüstwerkzeuges (1) an der Welle (10) der Fördervorrichtung (100) anliegen;
d) Rotation des Riemenrüstwerkzeuges (1), wobei die Nuten (40) hinzu zur Fördervorrichtung (100) gedreht werden; und
e) Entnehmen des Riemenrüstwerkzeuges (100), wobei der Riementräger (4) im Wesentlichen parallel zur Welle (10) herausgezogen wird.

11. Verfahren nach Anspruch 10, **dadurch gekennzeichnet, dass** ein weiteres Riemenrüstwerkzeuge (1) nach Anspruch 1 vorliegt, wobei die Verfahrensschritte a), c), d) und e) analog mit dem weiteren Riemenrüstwerkzeug (1) anstatt des Verfahrensschritts b) angewendet werden.

12. Verfahren nach Anspruch 10 bis 11, **dadurch gekennzeichnet, dass** die Riemen (6) per Hand auf das Riemenrüstwerkzeug (1) und/oder auf die Achse aufgezogen werden.

13. System aufweisend eine Fördervorrichtung (100), einem Riemenrüstwerkzeug (1) nach Anspruch 1 und mindestens zwei Riemen (6).
